# EUROPEAN PATENT APPLICATION

(11) **EP 4 834 656 A1**
(43) Date of publication of application: **04.11.2026**
(21) Application number: 24911470.3
(22) Date of filing: 27.12.2024
(51) Int. Cl.: B60N 2/28

(54) **CHILD SAFETY SEAT**

(30) Priority: 27.12.2023 CN 202311815354
(71) Applicant: Goodbaby Child Products Co., Ltd., Kunshan, Jiangsu 215331 (CN)
(72) Inventor: KUANG, Zhiyong, Suzhou, Jiangsu 215331 (CN); XU, Hongwei, Suzhou, Jiangsu 215331 (CN)
(74) Representative: Murgitroyd & Company
(86) International application number: PCT/CN2024/143179
(87) International publication number: WO 2025/140550

(57) **Abstract**

A child safety seat, comprising a seat body. The seat body comprises a seat (2) and a backrest (3) which is movably arranged with respect to the seat (2); the seat (2) has a first seat surface (211) and a second seat surface (221), and the backrest (3) has a backrest surface (311); the backrest (3) is movable with respect to the seat (2), so that the child safety seat has a first usage state and a second usage state; when the backrest (3) is in the first usage state, a loading space is formed between the backrest surface (311) and the first seat surface (211), enabling the child safety seat to be in a sitting usage state; and when the backrest (3) is in the second usage state, a loading space is formed between the backrest surface (311) and the second seat surface (221), enabling the child safety seat to be in a lying-down usage state.

## Description

### TECHNICAL FIELD

The present invention relates to the technical field of children's products, and in particular to a child safety seat.

### BACKGROUND

A child safety seat is used when a child rides in a car, to improve the safety performance of the child riding in the car. The child safety seat comprises a base and a seat body arranged on the base, and the seat body comprises a backrest and a seat portion.

In the conventional art, most child safety seats, when adjusting their usage states, are adjusted by sliding the seat body as a whole relative to the base. This adjustment manner cannot change the angle between the backrest and the seat portion, so that the comfort of the child safety seat is reduced in some usage states.

The backrest of some child safety seats is capable of rotating relative to the seat portion, and the angle between the backrest and the seat portion is adjusted by rotating the backrest relative to the seat portion, thereby adjusting the usage stated of the child safety seat. In this adjustment manner, when the backrest is converted between a first state and a second state, the backrest needs to be rotated by a relatively large angle, which requires a relatively large operating space and makes the structural size of the child safety seat relatively large. Meanwhile, the operation is inconvenient when the child safety seat is converted between the first state and the second state, which is inconvenient to use the child safety seat.

### SUMMARY

An object of the present invention is to provide a child safety seat which is convenient to operate in converting between various usage states and has a small structural volume, in view of the deficiencies in the conventional art.

To achieve the above object, the technical solution adopted by the present invention is as follows:
a child safety seat, including a seat body, the seat body including:
a seat portion, including a first seating surface and a second seating surface for supporting buttocks of a child;
a backrest, arranged movably with respect to the seat portion, the backrest comprising a backrest surface for supporting back of a child;
wherein the backrest is movable with respect to the seat portion such that the child safety seat has a first usage state and a second usage state; when the backrest is in the first usage state, an accommodation space is formed between the backrest surface and the first seating surface, so that the child safety seat is in a sitting-posture usage state; when the backrest is in the second usage state, an accommodation space is formed between the backrest surface and the second seating surface, so that the child safety seat is in a lying-posture usage state.

In some embodiments, in the first usage state, the backrest moves toward a side close to the seat portion to a position above the first seating surface;
in the second usage state, the backrest moves toward a side close to the seat portion to a position above the second seating surface.

In some embodiments, in the first usage state and the second usage state, the backrest surface is in different planes that tilt at different angles with respect to a horizontal plane.

In some embodiments, in the first usage state, the first seating surface is configured to support the buttocks of a child, and the second seating surface is configured to support legs of a child; in the second usage state, the second seating surface is configured to support the buttocks of a child.

In some embodiments, the first seating surface and the second seating surface are sequentially arranged in a front-rear direction, the first seating surface is arranged close to the backrest, and the first seating surface and the second seating surface are inclinedly arranged with respect to each other;
in the first usage state, a first included angle is formed between the backrest surface and the first seating surface;
in the second usage state, a second included angle is formed between the backrest surface and the second seating surface;
the second included angle is greater than the first included angle, so that in the first usage state, the child safety seat is used in a sitting posture, and in the second usage state, the child safety seat is used in a lying posture.

In some embodiments, the first seating surface has a first front end portion and a first rear end portion that are oppositely to each other, and the first front end portion is connected with the second seating surface; in the first usage state, the backrest surface moves to a position of the first rear end portion; in the second usage state, the backrest surface moves to a position of the first front end portion.

In some embodiments, when the backrest is at a same position, an included angle formed between the first seating surface and the backrest surface is smaller than an included angle formed between the second seating surface and the backrest surface.

In some embodiments, the backrest comprises a first backrest plate and a second backrest plate slidably arranged on the first backrest plate along a length direction of the first backrest plate, a side of the first backrest plate facing the seat portion is the backrest surface, when the backrest is in the first usage state, a lower end portion of the second backrest plate abuts against the first seating surface; when the backrest is in the second usage state, the lower end portion of the second backrest plate abuts against the second seating surface.

In some embodiments, the first backrest plate has an accommodating groove extending along a length direction thereof, a lower portion of the accommodating groove is open, and the second backrest plate is slidably arranged in the accommodating groove and is capable of extending from the lower portion of the accommodating groove to the outside of the accommodating groove.

In some embodiments, the backrest comprises a first backrest plate, a side of the first backrest plate facing the seat portion is the backrest surface, when the backrest is in the first usage state, a lower end portion of the first backrest plate abuts against the first seating surface, or a first gap is provided between the lower end portion of the first backrest plate and the first seating surface; when the backrest is in the second usage state, a second gap is provided between the lower end portion of the first backrest plate and the second seating surface, and the second gap is greater than the first gap.

In some embodiments, the backrest is arranged rotatably with respect to the seat portion; or the backrest is arranged slidably with respect to the seat portion; or the backrest is arranged rotatably and slidably with respect to the seat portion.

In some embodiments, the seat body further comprises a support assembly, the seat portion is fixedly arranged on the support assembly, the backrest is rotatably arranged on the support assembly, or the backrest is slidably arranged on the support assembly, or the backrest is rotatably and slidably arranged on the support assembly, and the child safety seat further comprises a base, and the support assembly is detachably arranged on the base.

In some embodiments, the support assembly comprises a first support rod and a second support rod, one end portion of the first support rod and the second support rod intersect with each other, the other end portion of the first support rod and the other end portion of the second support rod are respectively detachably connected with the base, the backrest is movably arranged on the first support rod and/or the second support rod, and the seat portion is fixedly arranged on the first support rod or the second support rod.

In some embodiments, the child safety seat further comprises a plurality of locking mechanisms for locking relative positions of the support assembly and the base, and the plurality of locking mechanisms are respectively arranged at a connection between the first support rod and the base, and at a connection between the second support rod and the base.

In some embodiments, the locking mechanisms comprise locking members rotatably arranged on the base and hook slots having openings and arranged on the base; when the locking mechanisms are in a locked state, the openings of the hook slots are fully closed or partially closed by the locking members, and clamping spaces for clamping the first support rod or the second support rod are formed between the locking members and the hook slots; when the locking mechanisms are in an unlocked state, the locking members leave the openings of the hook slots so that the openings of the hook slots are opened.

Owing to the application of the above technical solutions, the present invention has the following advantages compared with the conventional art: the seat portion of the child safety seat of the present invention has two seating surfaces, and the backrest is capable of moving relative to the seat portion to different seating surfaces, thereby forming accommodation spaces for carrying a child with the different seating surfaces, so that the child safety seat has a plurality of usage states, which improves the comfort of the child safety seat in use. Moreover, the two seating surfaces of the seat portion may inclinedly intersect with each other, so that when the child safety seat is converted between different usage states, the range of relative movement of the backrest is small, and the required operating space is also small, thereby facilitating the converting of the backrest between various usage states, and at the same time, the structural size of the child safety seat is small, the weight is light, and the transportation of the child safety seat is facilitated.

### BRIEF DESCRIPTION OF THE DRAWINGS

Fig. 1 is a perspective schematic view of the child safety seat of the present embodiment in the first usage state;
Fig. 2 is a front schematic view of the child safety seat of the present embodiment in the first usage state;
Fig. 3 is a cross-sectional schematic view along line A-A in Fig. 2;
Fig. 4 is a perspective schematic view of the child safety seat of the present embodiment in the second usage state;
Fig. 5 is a front schematic view of the child safety seat of the present embodiment in the second usage state;
Fig. 6 is a cross-sectional schematic view along line A-A in Fig. 5;
Fig. 7 is a first perspective schematic view of the seat body of the child safety seat of the present embodiment;
Fig. 8 is a second perspective schematic view of the seat body of the child safety seat of the present embodiment;
Fig. 9 is a front schematic view of the seat body of the child safety seat of the present embodiment;
Fig. 10 is a cross-sectional schematic view along line A-A in Fig. 9;
Fig. 11 is a perspective schematic view of the base of the child safety seat of the present embodiment;
Fig. 12 is a partial enlarged schematic view at A in Fig. 11;
Fig. 13 is a partial enlarged schematic view at B in Fig. 11;
Fig. 14 is a front schematic view of the base of the child safety seat of the present embodiment;
Fig. 15 is a cross-sectional schematic view along line A-A in Fig. 14;
Fig. 16 is a perspective schematic view of the support assembly of the child safety seat of the present embodiment;
Fig. 17 is a front schematic view of the support assembly of the child safety seat of the present embodiment;
Fig. 18 is a cross-sectional schematic view along line A-A in Fig. 17.

Wherein: 1 - base; 11 - hook slot; 2 - seat portion; 21 - first seat plate; 211 - first seating surface; 22 - second seat plate; 221 - second seating surface; 3 - backrest; 31 - first backrest plate; 311 - backrest surface; 312 - accommodating groove; 32 - second backrest plate; 4 - support assembly; 41 - first support rod; 42 - second support rod; 5 - handle; 6 - locking member.

### DETAILED DESCRIPTION

The technical solutions of the present invention will be further elaborated below with reference to the accompanying drawings and specific embodiments.

In the following description, the directions referred to such as "front", "rear", "left", "right", "upper", "lower" and the like are all defined in accordance with the child safety seat being installed on a car seat, with the direction toward the front of the car being the front and the direction toward the rear of the car being the rear, the left-right direction of the car corresponding to the left-right direction in the present embodiment, and the up-down direction of the car corresponding to the up-down direction in the present embodiment. The definition of the above directions is only for the convenience of describing the present invention and simplifying the description, and does not indicate or imply that the device or element referred to must have a specific orientation, or be constructed and operated in a specific orientation, and therefore shall not be construed as a limitation on the present invention.

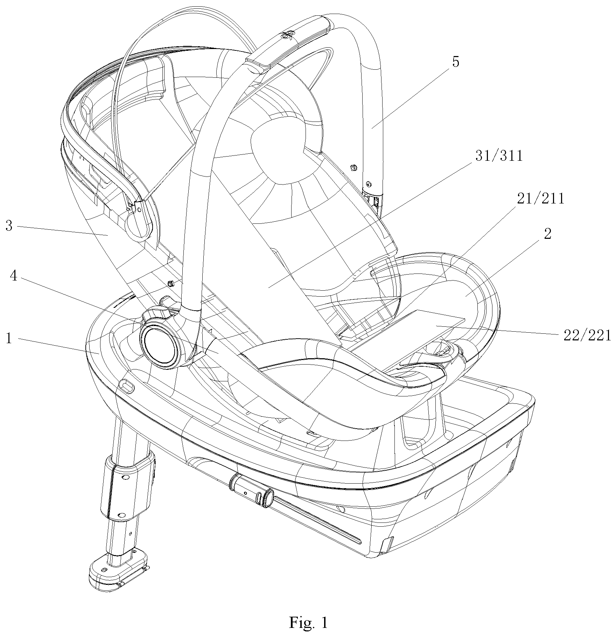

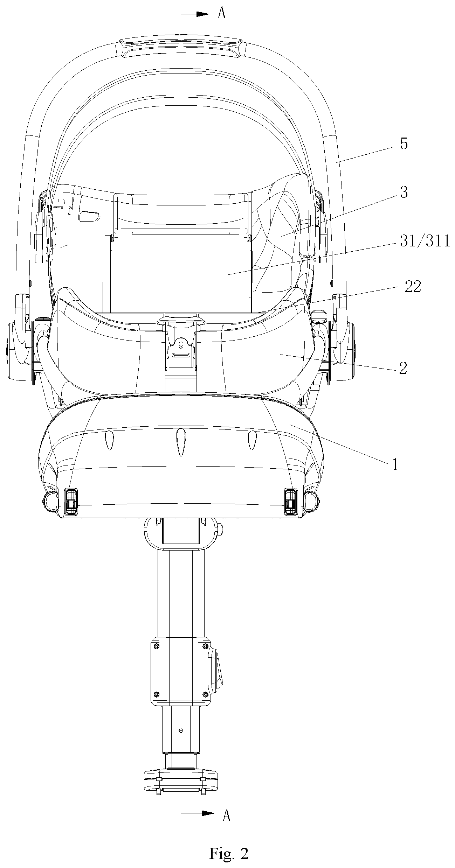

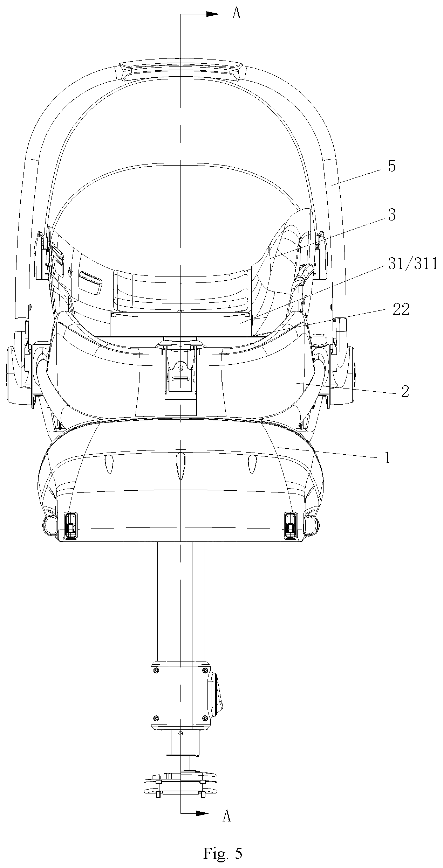

As shown in Figs. 1 to 6, the child safety seat of the present invention comprises a base 1 and a seat body, wherein the base 1 is connected with a car seat, and the seat body is for a child to sit on.

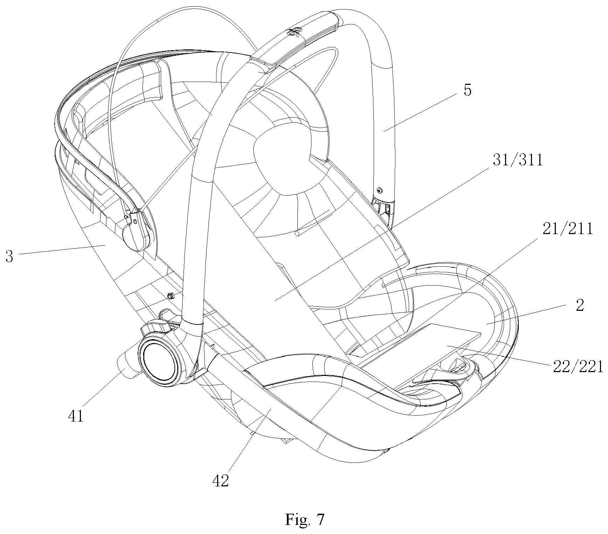

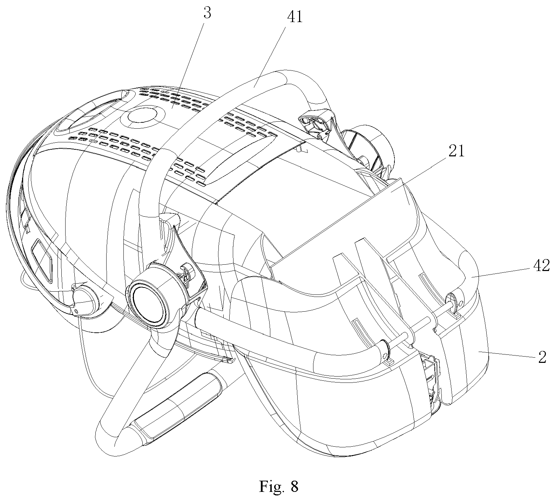

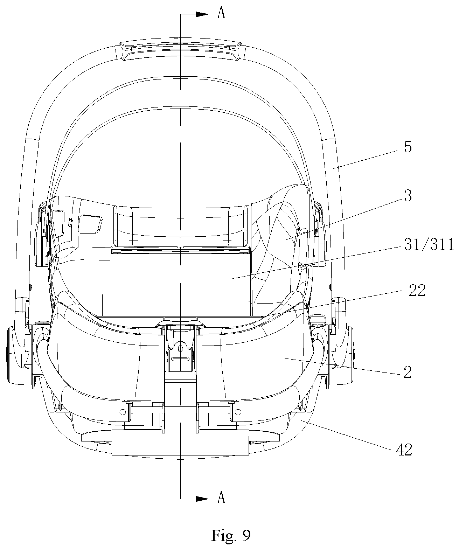

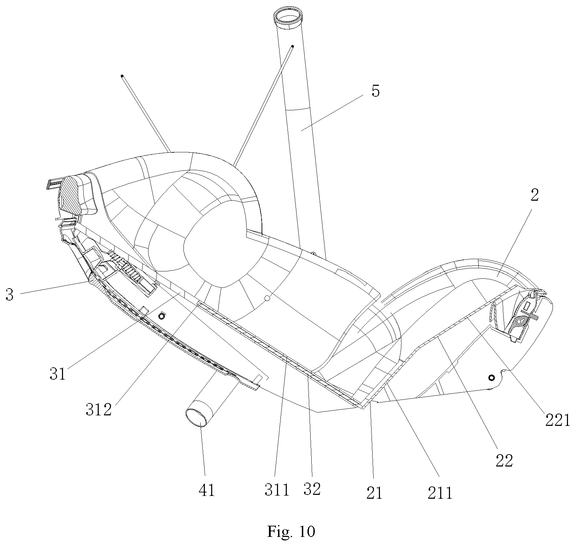

As shown in Figs. 1 to 10, the seat body comprises a seat portion 2 and a backrest 3, and the backrest 3 is arranged in front of or behind the seat portion 2.

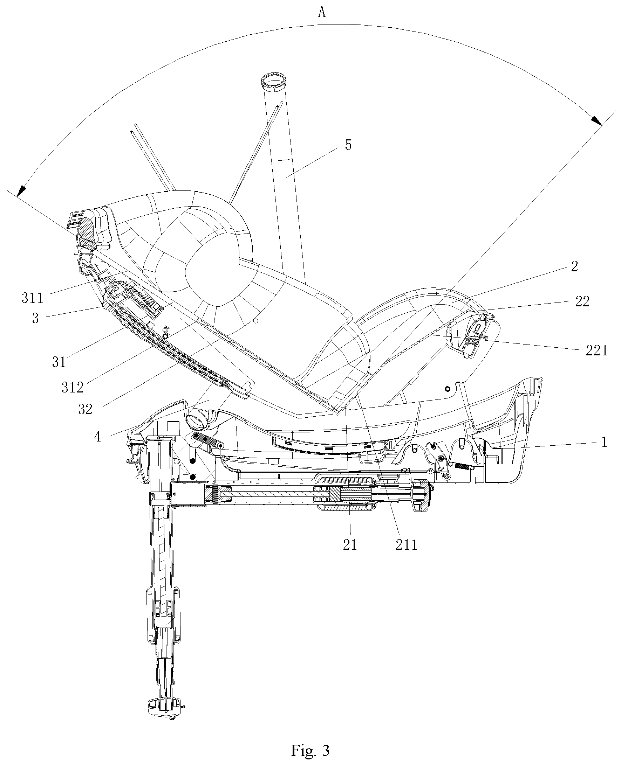

As shown in Figs. 3, 6 and 10, the seat portion 2 has a first seating surface 211 and a second seating surface 221. Both the first seating surface 211 and the second seating surface 221 are used for supporting the buttocks of a child. The first seating surface 211 and the second seating surface 221 are sequentially arranged in the front-rear direction, and the first seating surface 211 is arranged close to the backrest 3. The first seating surface 211 and the second seating surface 221 are inclinedly arranged relative to each other, and an included angle is formed between the two. In the present embodiment, one end portion of the first seating surface 211 and one end portion of the second seating surface 221 intersect inclinedly.

As shown in Figs. 3, 6 and 10, the backrest 3 has a backrest surface 311.

The backrest 3 is arranged movably relative to the seat portion 2, such that the backrest 3 moves relative to the seat portion 2 to form different angles with the seat portion 2, thereby placing the child safety seat in different usage states. Herein, the backrest 3 being arranged movably relative to the seat portion 2 may either be that the backrest 3 is movably connected with the seat portion 2 directly, or that the backrest 3 is movably connected with the seat portion 2 indirectly.

In the present embodiment, the child safety seat has a first usage state and a second usage state, as shown in Figs. 1 to 6.

When the child safety seat is in the first usage state, the backrest 3 moves toward a side close to the seat portion 2 to a position above the first seating surface 211, the backrest surface 311 or an extension surface thereof intersects with the first seating surface 211, and a first included angle A is formed between the backrest surface 311 and the first seating surface 211, as shown in Figs. 1 and 3. In this usage state, the first seating surface 211 is used for supporting the buttocks of a child, and the space between the backrest surface 311 and the first seating surface 211 forms an accommodation space for use by the child.

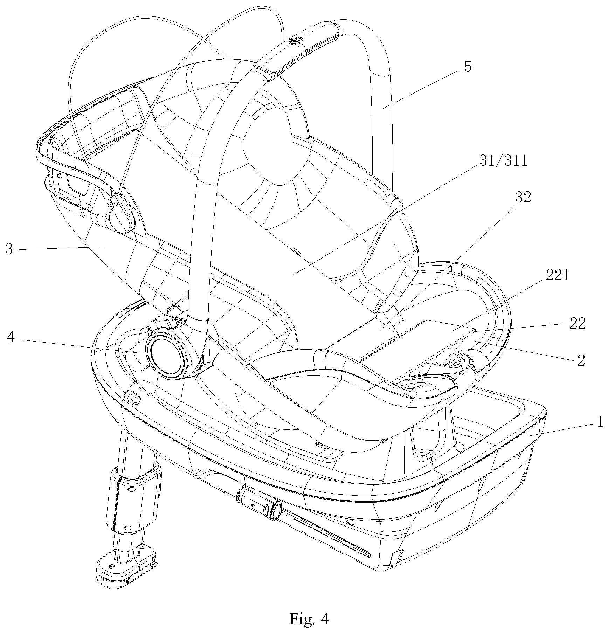

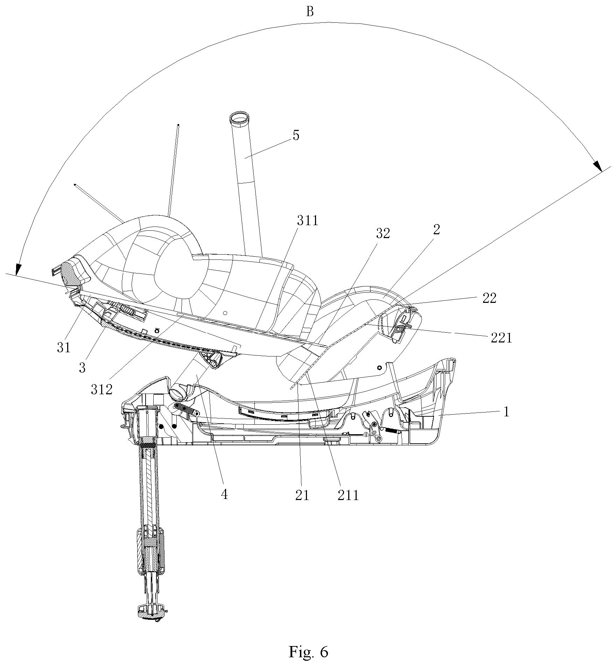

When the child safety seat is in the second usage state, the backrest 3 moves toward a side close to the seat portion 2 to a position above the second seating surface 221, the backrest surface 311 or an extension surface thereof intersects with the second seating surface 221, and a second included angle B is formed between the backrest surface 311 and the second seating surface 221, as shown in Figs. 4 and 6. In this usage state, the second seating surface 221 is used for supporting the buttocks of a child, and the space between the backrest surface 311 and the second seating surface 221 forms an accommodation space for use by the child.

The above-mentioned accommodation space refers to a space for supporting the back and buttocks of a child.

The second included angle B is greater than the first included angle A, so that when the child safety seat is in the first usage state, the child safety seat is in the sitting-posture usage state, and when the child safety seat is in the second usage state, the child safety seat is in the lying-posture usage state.

In this embodiment, when the child safety seat is in the first usage state and the second usage state, the backrest surface 311 is in different planes that tilt at different angles relative to a horizontal plane.

Of course, in other embodiments, when the child safety seat is in the first usage state and the second usage state, the backrest surface 311 may be located in planes that tilt at the same angle relative to the horizontal plane. Moreover, when the backrest surface 311 is located in planes that tilt at the same angle relative to the horizontal plane, because the first seating surface 211 and the second seating surface 221 are inclinedly arranged relative to each other, the included angle formed between the first seating surface 211 and the backrest surface 311 is smaller than the included angle formed between the second seating surface 221 and the backrest surface 311, that is, the second included angle B is greater than the first included angle A, as shown in Figs. 3 and 6.

In this embodiment, when the child safety seat is in the first usage state, the second seating surface 221 is used for supporting the legs of a child.

The first seating surface 211 has a first front end portion and a first rear end portion that are oppositely to each other, and the first front end portion is connected with the second seating surface 221. When the child safety seat is in the first usage state, the backrest surface 311 moves to a position of the first rear end portion. When the child safety seat is in the second usage state, the backrest surface 311 moves to a position of the first front end portion.

In the present embodiment, the seat portion 2 comprises a first seat plate 21 and a second seat plate 22 sequentially arranged in the front-rear direction, one end portion of the first seat plate 21 and one end portion of the second seat plate 22 intersect inclinedly, an upper end surface of the first seat plate 21 is the first seating surface 211, and an upper end surface of the second seat plate 22 is the second seating surface 221.

As shown in Figs. 3, 4 and 6, the backrest 3 may comprise a first backrest plate 31 and a second backrest plate 32. The second backrest plate 32 is slidably arranged on the first backrest plate 31 along a length direction of the first backrest plate 31, and the second backrest plate 32 can slide downward relative to the first backrest plate 31 and extend below the first backrest plate 31. An end surface of the first backrest plate 31 facing the seat portion 2 is the above-mentioned backrest surface 311.

When the child safety seat is in the first usage state, the lower end portion of the second backrest plate 32 abuts against the first seating surface 211, as shown in Fig. 3. When the child safety seat is in the second usage state, the lower end portion of the second backrest plate 32 abuts against the second seating surface 221, as shown in Figs. 4 and 6. By providing the second backrest plate 32, it is possible to prevent a gap from being formed between the backrest 3 and the seat portion 2 in various usage states of the child safety seat, which would otherwise affect the comfort of the child safety seat in use.

Specifically, the first backrest plate 31 has an accommodating groove 312 extending along a length direction thereof, and a lower portion of the accommodating groove 312 is open. The second backrest plate 32 is slidably arranged in the accommodating groove 312, and can extend from the lower portion of the accommodating groove 312 to the outside of the accommodating groove 312, thereby abutting against the first seating surface 211 or the second seating surface 221.

Of course, the backrest 3 may also comprise a single first backrest plate 31, and an end surface of the first backrest plate 31 facing the seat portion 2 is the above-mentioned backrest surface 311. When the child safety seat is in the first usage state, the lower end portion of the first backrest plate 31 abuts against the first seating surface 211, or a first gap is provided between the lower end portion of the first backrest plate 31 and the first seating surface 211. When the child safety seat is in the second usage state, a second gap is provided between the lower end portion of the first backrest plate 31 and the second seating surface 221, and the second gap is greater than the first gap.

Several arrangements of the backrest 3 being movably relative to the seat portion 2 are specifically given in the present application as follows:
in one specific embodiment, the backrest 3 is arranged rotatably relative to the seat portion 2. By rotating the backrest 3 relative to the seat portion 2, the child safety seat has the above-mentioned first usage state and second usage state, and can be converted between the first usage state and the second usage state, as shown in Figs. 1 to 10.

Moreover, when the child safety seat is in the first usage state, rotating the backrest 3 relative to the seat portion 2 can cause the backrest surface 311 or an extension surface thereof to intersect with different positions on the first seating surface 211, so that the first included angle A formed between the backrest surface 311 and the first seating surface 211 is also different. In this way, the angle between the backrest surface 311 and the first seating surface 211 can also be adjusted when the child safety seat is in the first usage state, thereby improving the comfort of the child safety seat in use.

Similarly, when the child safety seat is in the second usage state, rotating the backrest 3 relative to the seat portion 2 can cause the backrest surface 311 or an extension surface thereof to intersect with different positions on the second seating surface 221, so that the second included angle B formed between the backrest surface 311 and the second seating surface 221 is also different. In this way, the angle between the backrest surface 311 and the second seating surface 221 can also be adjusted when the child safety seat is in the second usage state, thereby improving the comfort of the child safety seat in use.

In addition, when the usage state of the child safety seat is adjusted by rotating the backrest 3 relative to the seat portion 2, the rotation angle of the backrest 3 is equivalent to the rotation angle of the backrest 3 in the conventional art minus the angle of the included angle between the first seating surface 211 and the second seating surface 221, so that the rotation angle of the backrest 3 is relatively small, and thus the required operating space is relatively small, facilitating the converting of the child safety seat between various usage states. At the same time, the structural size of the child safety seat is small, the weight is light, and the transportation of the child safety seat is facilitated.

In another specific embodiment, the backrest 3 is arranged slidably relative to the seat portion 2. By sliding the backrest 3 relative to the seat portion 2, the child safety seat has the above-mentioned first usage state and second usage state, and can be converted between the first usage state and the second usage state.

Alternatively, in other embodiments, by arranging the backrest 3 rotatably and slidably relative to the seat portion 2, the child safety seat may also have the above-mentioned first usage state and second usage state, and be convertable between the first usage state and the second usage state.

The seat body further comprises a support assembly 4, and the support assembly 4 is arranged on the base 1. The seat portion 2 is fixedly arranged on the support assembly 4. The backrest 3 may be rotatably arranged on the support assembly 4, the backrest 3 may also be slidably arranged on the support assembly 4, or alternatively, the backrest 3 may be rotatably and slidably arranged on the support assembly 4.

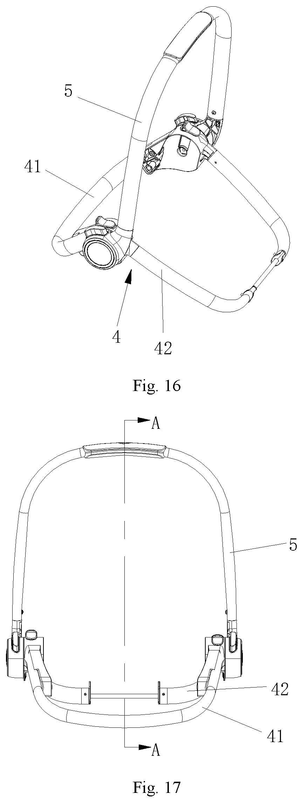

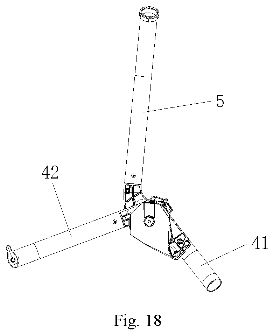

In the present embodiment, the support assembly 4 comprises a first support rod 41 and a second support rod 42, one end portion of the first support rod 41 and one end of the second support rod 42 are fixedly connected or integrated, and the support assembly 4 as a whole forms a V-shaped structure with an opening facing downward, as shown in Figs. 16 to 18. The backrest 3 is movably arranged on the first support rod 41 and/or the second support rod 42, and the seat portion 2 is fixedly arranged on the first support rod 41 or the second support rod 42. When the backrest 3 moves relative to the seat portion 2 to adjust the usage state of the child safety seat, the lower portion of the backrest 3 can move within the area enclosed by the V-shaped structure, so that the activity space for the backrest 3 to move relative to the seat portion 2 is relatively large, as shown in Figs. 3 and 6.

The support assembly 4 is detachably arranged on the base 1, such that the seat body 1 as a whole can be detached from the base 1.

The seat body further comprises a handle 5, and the handle 5 is rotatably arranged on the support assembly 4. After the seat body is detached from the base 1, the seat body can be carried away from the base 1 as a whole by lifting the handle 5. When the seat body is installed on the base 1 for use, the handle 5 can be rotated relative to the support assembly 4 so as to approach the backrest 3 or the seat portion 2.

In the present embodiment, the other end portion of the first support rod 41 and the other end portion of the second support rod 42 are respectively detachably connected with the base 1.

The child safety seat further comprises a locking mechanism. After the support assembly 4 is connected to the base 1, the relative positions of the support assembly 4 and the base 1 are locked by the locking mechanism, so that the support assembly 4 cannot be detached from the base 1. After the locking mechanism is unlocked, the seat body as a whole can be detached from the base 1.

In the present embodiment, a plurality of locking mechanisms are respectively arranged at a connection between the first support rod 41 and the base 1, and at a connection between the second support rod 42 and the base 1.

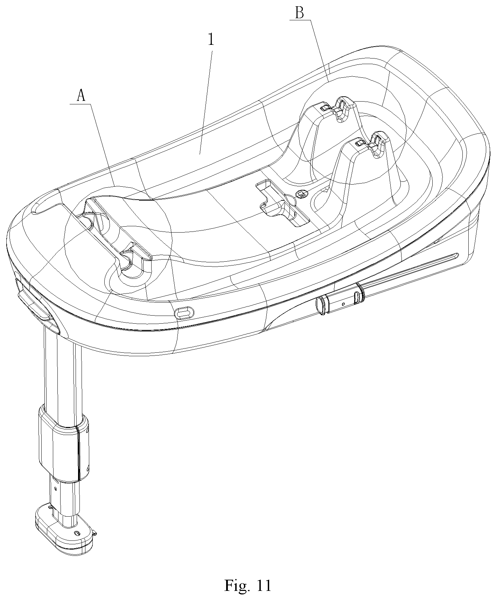

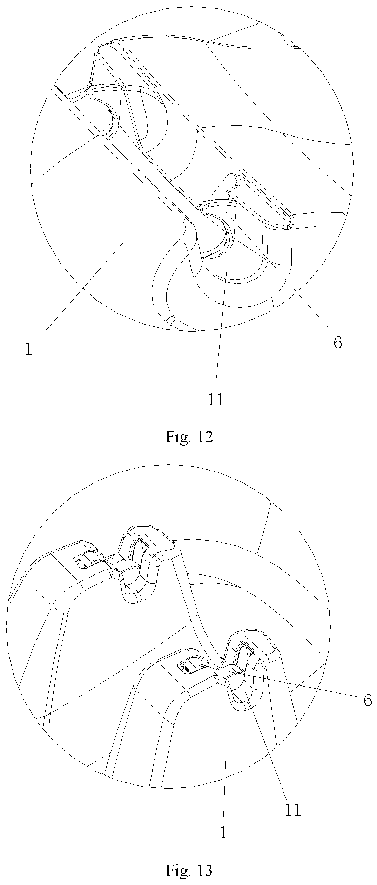

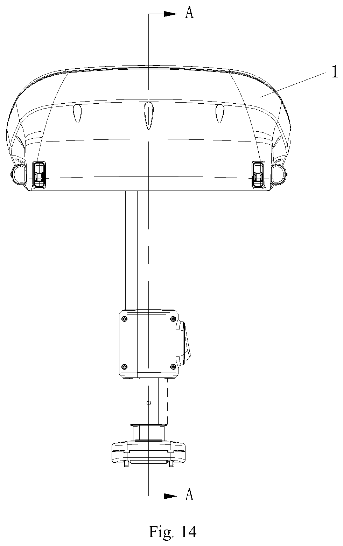

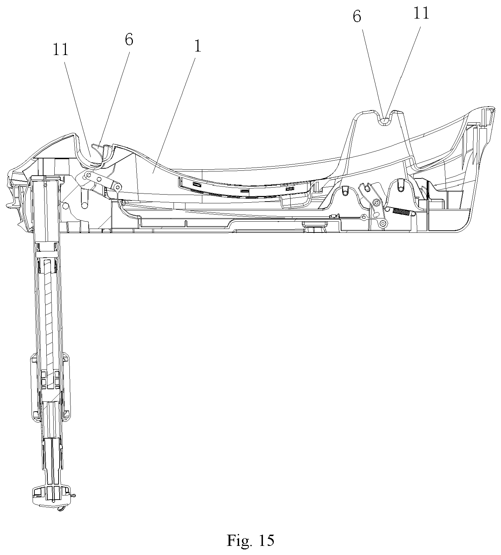

Specifically, the locking mechanisms comprise locking members 6, and the locking members 6 are rotatably arranged on the base 1. The base 1 is further provided with hook slots 11 having openings, as shown in Figs. 11 to 15. When the locking mechanisms are in a locked state, the openings of the hook slots 11 are fully closed or partially closed by the locking members 6, and clamping spaces for clamping the first support rod 41 or the second support rod 42 are formed between the locking members 6 and the hook slots 11. When the support assembly 4 is connected with the base 1, the first support rod 41 and the second support rod 42 are respectively located in the clamping spaces at corresponding positions and cannot be released from the corresponding clamping spaces, so that the support assembly 4 cannot be detached from the base 1. When the locking mechanisms are in an unlocked state, the locking members 6 rotate relative to the base 1 and leave the openings of the hook slots 11, so that the openings of the hook slots 11 are opened, and the first support rod 41 and the second support rod 42 can be released from the openings of the hook slots 11 at the corresponding positions, thereby releasing the support assembly 4 from the base 1.

The above embodiments are only used to illustrate the technical concept and features of the present invention, and their purpose is to enable those skilled in the art to understand the content of the present invention and implement it accordingly, but not to limit the protection scope of the present invention. Any equivalent changes or modifications made in accordance with the spirit and essence of the present invention shall fall within the protection scope of the present invention.

## Claims

1. A child safety seat, is **characterized in that**, comprising a seat body, the seat body comprising:
a seat portion, comprising a first seating surface and a second seating surface for supporting buttocks of a child;
a backrest, arranged movably with respect to the seat portion, the backrest comprising a backrest surface for supporting back of a child;
wherein the backrest is movable with respect to the seat portion such that the child safety seat has a first usage state and a second usage state; when the backrest is in the first usage state, an accommodation space is formed between the backrest surface and the first seating surface, so that the child safety seat is in a sitting-posture usage state; when the backrest is in the second usage state, an accommodation space is formed between the backrest surface and the second seating surface, so that the child safety seat is in a lying-posture usage state.

2. The child safety seat according to claim 1, is **characterized in that**, in the first usage state, the backrest moves toward a side close to the seat portion to a position above the first seating surface;
in the second usage state, the backrest moves toward a side close to the seat portion to a position above the second seating surface.

3. The child safety seat according to claim 2, is **characterized in that**, in the first usage state and the second usage state, the backrest surface is in different planes that tilt at different angles with respect to a horizontal plane.

4. The child safety seat according to claim 2, is **characterized in that**, in the first usage state, the first seating surface is configured to support the buttocks of a child, and the second seating surface is configured to support legs of a child; in the second usage state, the second seating surface is configured to support the buttocks of a child.

5. The child safety seat according to claim 2, is **characterized in that**, the first seating surface and the second seating surface are sequentially arranged in a front-rear direction, the first seating surface is arranged close to the backrest, and the first seating surface and the second seating surface are inclined with respect to each other;
in the first usage state, a first included angle is formed between the backrest surface and the first seating surface;
in the second usage state, a second included angle is formed between the backrest surface and the second seating surface;
the second included angle is greater than the first included angle, so that in the first usage state, the child safety seat is in a sitting posture, and in the second usage state, the child safety seat is in a lying posture.

6. The child safety seat according to claim 5, is **characterized in that**, the first seating surface has a first front end portion and a first rear end portion that are opposite to each other, and the first front end portion is connected with the second seating surface; in the first usage state, the backrest surface moves to a position of the first rear end portion; in the second usage state, the backrest surface moves to a position of the first front end portion.

7. The child safety seat according to claim 1, is **characterized in that**, when the backrest is at a same position, an included angle formed between the first seating surface and the backrest surface is smaller than an included angle formed between the second seating surface and the backrest surface.

8. The child safety seat according to claim 1, is **characterized in that**, the backrest comprises a first backrest plate and a second backrest plate slidably arranged on the first backrest plate along a length direction of the first backrest plate, a side of the first backrest plate facing the seat portion is the backrest surface, when the backrest is in the first usage state, a lower end portion of the second backrest plate abuts against the first seating surface; when the backrest is in the second usage state, the lower end portion of the second backrest plate abuts against the second seating surface.

9. The child safety seat according to claim 8, is **characterized in that**, the first backrest plate has an accommodating groove extending along a length direction thereof, a lower portion of the accommodating groove is open, and the second backrest plate is slidably arranged in the accommodating groove and is capable of extending from the lower portion of the accommodating groove to the outside of the accommodating groove.

10. The child safety seat according to claim 1, is **characterized in that**, the backrest comprises a first backrest plate, a side of the first backrest plate facing the seat portion is the backrest surface, when the backrest is in the first usage state, a lower end portion of the first backrest plate abuts against the first seating surface, or a first gap is provided between the lower end portion of the first backrest plate and the first seating surface; when the backrest is in the second usage state, a second gap is provided between the lower end portion of the first backrest plate and the second seating surface, and the second gap is greater than the first gap.

11. The child safety seat according to claim 1, is **characterized in that**, the backrest is arranged rotatably with respect to the seat portion; or the backrest is arranged slidably with respect to the seat portion; or the backrest is arranged rotatably and slidably with respect to the seat portion.

12. The child safety seat according to claim 1 or 11, is **characterized in that**, the seat body further comprises a support assembly, the seat portion is fixedly arranged on the support assembly, the backrest is rotatably arranged on the support assembly, or the backrest is slidably arranged on the support assembly, or the backrest is rotatably and slidably arranged on the support assembly, and the child safety seat further comprises a base, and the support assembly is detachably arranged on the base.

13. The child safety seat according to claim 12, is **characterized in that**, the support assembly comprises a first support rod and a second support rod, one end portion of the first support rod and the second support rod intersect with each other, the other end portion of the first support rod and the other end portion of the second support rod are respectively detachably connected with the base, the backrest is movably arranged on the first support rod and/or the second support rod, and the seat portion is fixedly arranged on the first support rod or the second support rod.

14. The child safety seat according to claim 13, is **characterized in that**, the child safety seat further comprises a plurality of locking mechanisms for locking relative positions of the support assembly and the base, and the plurality of locking mechanisms are respectively arranged at a connection between the first support rod and the base, and at a connection between the second support rod and the base.

15. The child safety seat according to claim 14, is **characterized in that**, the locking mechanisms comprise locking members rotatably arranged on the base and hook slots having openings and arranged on the base; when the locking mechanisms are in a locked state, the openings of the hook slots are fully closed or partially closed by the locking members, and clamping spaces for clamping the first support rod or the second support rod are formed between the locking members and the hook slots; when the locking mechanisms are in an unlocked state, the locking members leave the openings of the hook slots so that the openings of the hook slots are opened.
